Europäisches Patentamt

European Patent Office

Office européen des brevets

(19)

(11) Numéro de publication: **0 022 760**
**A1**

# (12) DEMANDE DE BREVET EUROPEEN

(21) Numéro de dépôt: **80870010.8**

(22) Date de dépôt: **15.02.80**

(51) Int. Cl.³: **G 09 B 3/08**

(30) Priorité: **16.02.79 BE 193536**

(43) Date de publication de la demande: **21.01.81**
**Bulletin 81/3**

(84) Etats contractants désignés: **AT CH DE FR GB IT NL SE**

(71) Demandeur: **AMPLIKART S.P.R.L., 53, rue de Naples,**
**1050 Bruxelles (BE)**

(72) Inventeur: **From, Joseph, 53, rue de Naples,**
**B-1050 Bruxelles (BE)**

(54) **Auto-contrôle pour questionnaire à choix multiple.**

(57) Dans la grille de correction correspondant à un questionnaire à choix multiple, la lettre, le chiffre ou l'emplacement correspondant à chaque réponse est imprimé dans une encre spéciale.

Cette encre, sous l'action d'un liquide dégage une couleur différente, selon que la réponse est bonne ou mauvaise et permet a la personne qui subit l'interrogation ou qui effectue l'exercice, de voir de suite si son choix est valable ou non.

EP 0 022 760 A1

P.R.L.
V.B.A.  **AmpliKart**

• FOR BETTER HUMAN COMMUNICATION
AND STIMULATION •

Rue de Naples 53 Napelsstraat
1050 BRUXELLES-BRUSSEL
Tél. (02) 513.95.74

Bruxelles, le 16 février 1979.

0022760

## DESCRIPTION.

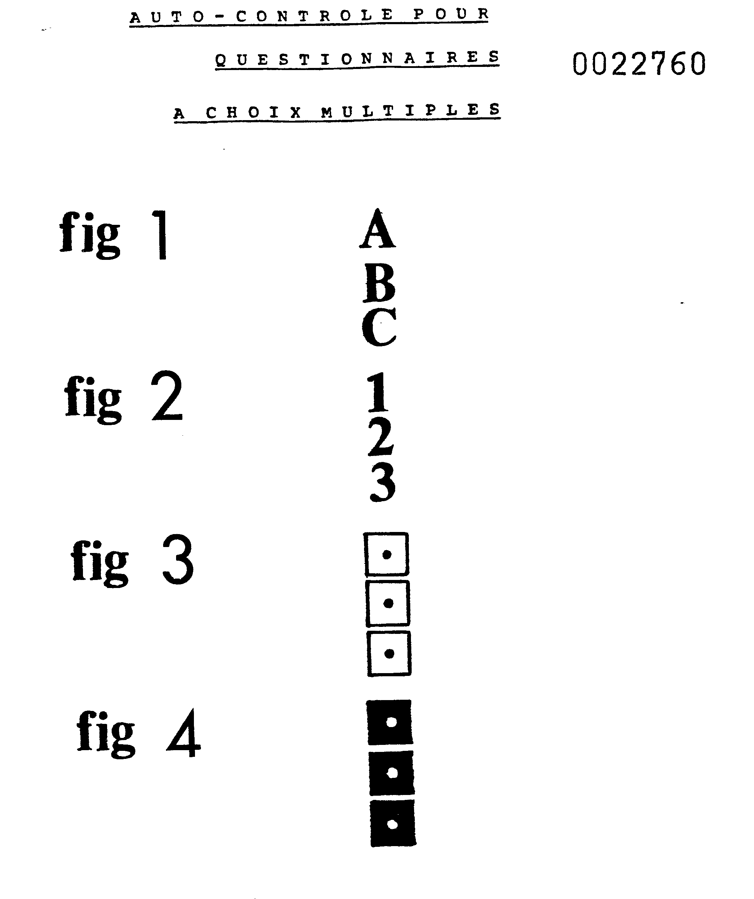

Dans les Fig. 1 et 2 nous avons les éléments A, B, C, 1, 2, 3 et dans la Fig. 3, 3 points , comme éléments.
Ces éléments seront imprimés dans des encres contenant une couleur soluble à l'eau.

Selon le type de réponse voulu, la couleur soluble sera rouge, verte ou autre.

Quand on frotte un de ces éléments au moyen d'un marqueur, dégageant de l'eau, l'eau va imprégner l'élément imprimé et faire dégorger de celui-ci la couleur soluble que l'encre contient.

A ce moment, le pourtour de l'élément va se teindre dans une certaine couleur. Si nous attachons à chaque couleur un sens, par rapport à une bonne ou une mauvaise réponse, nous pouvons présenter la solution suivante :

| | |
|---|---|
| VERT | bonne réponse |
| ROUGE | erreur |
| ORANGE | incomplet. |

Au départ la grille est noir d'aspect, mais l'impression de la feuille a demandé :

a) Une impression pour les textes ou/et les dessins
b) Une impression pour chaque couleur à révéler.

L'impression pour les couleurs à révéler doit donner un aspect identique pour toutes les couleurs, de façon qu'avant de mouiller l'élément qu'on a choisi, il est impossible de reconnaître à l'oeil les éléments qui vont dégorger des couleurs différentes.

C'est en mouillant l'impression qu'on se rend compte, par la couleur obtenue, que la réponse choisie est bonne ou mauvaise.

Il suffit d'introduire dans l'encre noire ou foncée d'imprimerie, des éléments solubles qui, en se diluant dégagent une couleur déterminée. Dans l'exemple ci-dessous, nous utilisons de l'encre contenant une teinture soluble à l'eau.

On peut utiliser une encre contenant des produits solubles à l'alcool ou à tout autre produit.

Pour obtenir le dégagement de la couleur, on peut frotter l'élément imprimé avec :

1) Un marqueur contenant de l'eau
2) Un morceau d'ouate mouillée.
3) Un morceau de tissus mouillé.
4) Un pinceau mouillé.
   ou autre moyen de mouiller l'emplacement.

../..

**S.P.R.L. AmpliKart**
**P.V.B.A.**

■ FOR BETTER HUMAN COMMUNICATION
AND STIMULATION ■

Rue de Naples 53 Napelsstraat
1050 BRUXELLES-BRUSSEL
Tél. (02) 513.95.74

../..

Si l'encre contient un colorant soluble dans un autre produit que l'eau, il suffit de remplacer l'eau par cet autre produit.

L'impression peut se faire en négatif, de façon à colorer la zone blanche encadrée de noir. (voir Fig.4 )

Si le diluant est de l'eau, la technique d'imprimerie ne pourra pas être de l'offset classique, mais l'offset sèche ou de la typo.

Dans certains cas, on devra utiliser de la sériegraphie.

BPRL
PV.B.A. AmpliKart

« FOR BETTER HUMAN COMMUNICATION
AND STIMULATION »

Rue de Naples 53 Napelsstraat
1050 BRUXELLES-BRUSSEL
Tel (02) 513.95.74

Bruxelles, le 16 février 1979.

**0022760**

REVENDICATIONS

1) Grilles de correction d'interrogation ou de test, consistant en des impressions avec des encres qui, sous un aspect identique contiennent des colorants de couleur différente, solubles au contact d'un liquide.

2) Moyen selon la revendication n°1 et dans lequel les colorants sont dissous par de l'eau.

3) Moyen selon la revendication n°1 et dans lequel les colorants sont dissous par de l'alcool.

4) Moyen selon la revendication n°1 et dans lequel les colorants sont dissous par un autre produit.

5) Moyen selon les revendications n°s 1 - 2 - 3 - 4 et dans lequel le produit utilisé pour dissoudre le colorant est contenu dans un marqueur, un stylo à bille ou tout autre moyen permettant un déplacement facile.

BAD ORIGINAL

**fig 1**

A
B
C

**fig 2**

1
2
3

**fig 3**

**fig 4**

AMPLIKART   S P R L          15 - II - 1979

Inventeur : J.FROM

Office européen
des brevets

**RAPPORT DE RECHERCHE EUROPEENNE**

0022760

Numéro de la demande

EP 80 87 0010

| Catégorie | Citation du document avec indication, en cas de besoin, des parties pertinentes | Revendication concernee | CLASSEMENT DE LA DEMANDE (Int. Cl. 3) |
|---|---|---|---|
| | **DOCUMENTS CONSIDERES COMME PERTINENTS** | | |
| X | FR - A - 2 084 649 (A.B. DICK COMPANY)<br>* En entier * | 1,3,<br>5 | G 09 B 3/08 |
| | -- | | |
| X | FR - A - 1 538 056 (A.B. DICK COMPANY)<br>* Résumé * | 1-4 | |
| | -- | | |
| X | US - A - 4 084 332 (J.S. WALOSZYK et al.)<br>* En entier * | 1,2,<br>4,5 | **DOMAINES TECHNIQUES RECHERCHES (Int. Cl. 3)**<br><br>G 09 B 3/08 |
| | -- | | |
| X | DE - A - 2 406 911 (GÜNTHER WAGNER PELIKAN-WERKE GMBH)<br>* En entier * | 1,5 | |
| | -- | | |
| X | FR - A - 719 507 (H.J. PETERSON et al.)<br>* En entier * | 1,2,<br>4,5 | |
| | ---- | | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

Le présent rapport de recherche a été établi pour toutes les revendications

| Lieu de la recherche | Date d'achevement de la recherche | Examinateur |
|---|---|---|
| La Haye | 25-07-1980 | CARDON |

OEB Form 1503.1   06.78